# EUROPÄISCHE PATENTANMELDUNG

(11) **EP 3 799 290 A1**
(43) Veröffentlichungstag der Anmeldung: **31.03.2021**
(21) Anmeldenummer: 20198332.7
(22) Anmeldetag: 25.09.2020
(51) Int. Cl.: H02M 7/487, H02M 7/5387, H02M 1/088

(54) **ELEKTRISCHES ANTRIEBSSYSTEM UND VERFAHREN ZUM BETRIEB EINES STROMRICHTERS**

(30) Priorität: 26.09.2019 DE 102019214719
(71) Anmelder: Bombardier Transportation GmbH, 10785 Berlin (DE)
(72) Erfinder: Vogelsberger, Markus, 6152 Trins (AT); Wirth, Christian, 8404 Winterthur (CH)
(74) Vertreter: Ramrath, Lukas

(57) **Zusammenfassung**

Die Erfindung betrifft einen Stromrichter (1), ein elektrisches Antriebssystem (2) und ein Verfahren zum Betrieb eines Stromrichters (1), wobei der Stromrichter (1) Anschlüsse (4a, 4b) zur Verbindung mit einer Gleichspannungsquelle (5) und Anschlüsse (8a, 8b, 8c) zur elektrischen Verbindung mit Phasenleitungen (P1, P2, P3) einer elektrischen Antriebsmaschine (3) aufweist, wobei der Stromrichter (1) konfiguriert ist, eine Gleichspannung von der Gleichspannungsquelle (5) über einen Gleichspannungszwischenkreis (9) in eine Wechselspannung umzuwandeln, um die Antriebsmaschine (3) anzutreiben, wobei der Stromrichter (1) Brückenzweige (10a, 10b, 10c) zur Verbindung eines Hochpotentialabschnitts (6) mit einem Niedrigpotentialabschnitt (7) umfasst, wobei ein Brückenzweig (10a, 10b, 10c) zwei Halbzweige (HZ1, HZ2) mit jeweils mindestens einer Schalteinrichtung (11, 11a, 11b, 11c, 11d) umfasst, wobei eine resultierende Nennspannung eines Halbzweigs (HZ1, HZ2) größer ist als eine gegenelektromotorische Spitzenspannung (EMF) zwischen zwei Phasenleitungen (P1, P2, P3) der Antriebsmaschine (3) bei maximaler Rotationsgeschwindigkeit der Antriebsmaschine (3), wobei ein Halbzweig (HZ1, HZ2) eines Brückenzweigs (10a, 10b, 10c) eine Reihenschaltung von zwei oder mehr als zwei Schalteinrichtungen (11, 11a, 11b, 11c, 11d) umfasst.

## Beschreibung

Die Erfindung betrifft ein elektrisches Antriebssystem und ein Verfahren zum Betrieb eines Stromrichters.

Dem Fachmann sind elektrische Antriebssysteme mit einer Permanentmagnetmaschine und einem Stromrichter bekannt. Ein Stromrichter kann eine Vielzahl von Siliziumkarbid-Schalteinrichtungen umfassen, wobei die Schalteinrichtungen üblicherweise eine Nennspannung aufweisen müssen, die größer ist als eine gegenelektromotorische Spitzenspannung (EMF) zwischen zwei Phasenleitungen der Antriebsmaschine bei maximaler Rotationsgeschwindigkeit der Antriebsmaschine.

Gegenelektromotorische Spannungen zwischen Phasenleitungen können insbesondere dann auftreten, wenn ein Wechsel von einem motorischen Betrieb in einen generatorischen Betrieb der Antriebsmaschine erfolgt. Dies kann z.B. der Fall sein, wenn eine Soll-Drehzahl oder ein Soll-Drehmoment beim Betrieb der Antriebsmaschine reduziert wird, beispielsweise weil ein Fahrzeugführer eines Schienenfahrzeugs eine Geschwindigkeit des Schienenfahrzeugs reduzieren möchte. Auch kann ein solches Szenario auftreten, wenn bei einer konstanten Geschwindigkeit des Schienenfahrzeugs die Steigung der Strecke abnimmt, z.B. weil ein höchster Punkt eines Bergs passiert wurde. Gegenelektromotorische Spannungen werden also von der Antriebsmaschine erzeugt und fallen zumindest zwischen zwei Phasenleitungen ab.

Eine vorteilhafte Ausbildung der Schalteinrichtungen erhöht die Betriebssicherheit, da hierdurch sichergestellt werden kann, dass die Schalteinrichtungen nicht durch zu hohe gegenelektromotorische Spannungen beschädigt werden können. Nachteilig ist jedoch, dass die erläuterte Ausbildung in der Regel hohe Kosten verursacht. Auch sind entsprechende Schalteinrichtungen in der Regel Sonderanfertigungen, da sie nicht standardmäßig für hohe gegenelektromotorische Spannungen verfügbar sind.

Es stellt sich daher das technische Problem, ein elektrisches Antriebssystem und ein Verfahren zum Betrieb eines Stromrichters zu schaffen, die einerseits eine gewünschte Betriebssicherheit gewährleisten und Herstellungskosten reduzieren. Weiter stellt sich das technische Problem, einen verbesserten Betrieb einer elektrischen Maschine mit einem Stromrichter zu schaffen.

Die Lösung des technischen Problems ergibt sich durch die Gegenstände mit den Merkmalen der unabhängigen Ansprüche. Weiter vorteilhafte Ausgestaltungen der Erfindung ergeben sich aus den Unteransprüchen.

Vorgeschlagen wird ein elektrisches Antriebssystem, insbesondere für ein Schienenfahrzeug, wobei das elektrische Antriebssystem einen Stromrichter und eine elektrische Antriebsmaschine umfasst. Die elektrische Antriebsmaschine ist an den Stromrichter angeschlossen.

Die elektrische Antriebsmaschine ist eine permanenterregte Antriebsmaschine. Vorzugsweise ist die elektrische Antriebsmaschine eine permanenterregte Synchronmaschine.

Der Stromrichter weist Anschlüsse zur Verbindung mit einer Gleichspannungsquelle, beispielsweise einer Traktionsbatterie oder einem externen elektrischen Versorgungsnetz, auf, insbesondere einen Hochpotential-Gleichspannungsanschluss für einen HochpotentialAbschnitt und einen Niedrigpotential-Gleichspannungsanschluss für einen NiedrigpotentialAbschnitt des Stromrichters. Ein Hochpotential ist hierbei ein Gleichspannungspotential, welches höher als das Niedrigpotential ist. Auch das Niedrigpotential ist ein Gleichspannungspotential.

Weiter weist der Stromrichter Anschlüsse zur elektrischen Verbindung mit Phasenleitungen der elektrischen Antriebsmaschine auf, insbesondere Anschlüsse für drei Phasenleitungen. Die Phasenleitungen dienen zum Leiten eines Wechselstroms.

Weiter ist der Stromrichter konfiguriert, eine Gleichspannung von der Gleichspannungsquelle über einen Gleichspannungszwischenkreis in eine Wechselspannung umzuwandeln, um die Antriebsmaschine anzutreiben. Der Gleichspannungszwischenkreis kann hierbei mindestens ein kapazitives Element umfassen, welches zwischen dem Hochpotential- und dem Niedrigpotentialabschnitt angeordnet ist, der Hochpotentialabschnitt das Hochpotential und der Niedrigpotentialabschnitt das Niedrigpotential aufweist.

Weiter umfasst der Stromrichter Brückenzweige zur Verbindung des Hochpotentialabschnitts mit dem Niedrigpotentialabschnitt. Ein Brückenzweig kann hierbei elektrisch parallel zum Gleichspannungszwischenkreis des Stromrichters angeordnet sein.
Weiter umfasst ein Brückenzweig zwei Halbzweige mit jeweils mindestens einer Schalteinrichtung. Hierbei dient ein erster Halbzweig zur elektrischen Verbindung zwischen dem Hochpotentialabschnitt und dem Anschluss für eine Phasenleitung an den Brückenzweig. Ein zweiter Halbzweig dient zur elektrischen Verbindung zwischen dem Niedrigpotentialabschnitt und dem Anschluss für die Phasenleitung an den Brückenzweig. Im Brückenzweig sind die Halbzweige in Reihe geschaltet. Der Anschluss für die Phasenleitung ist in einem Verbindungsabschnitt der beiden Halbzweige angeordnet bzw. mit diesem Verbindungsabschnitt verbunden.

Die Schalteinrichtung kann hierbei eine elektronische Schalteinrichtung sein. Diese kann insbesondere ein Schaltelement, z.B. ein als MOSFET oder als IGBT ausgebildetes Schaltelement, umfassen. Weiter kann die Schalteinrichtung eine Freilaufdiode umfassen. Diese kann elektrisch parallel zum Schaltelement geschaltet sein. Ein Schaltelement kann hierbei einen geschlossenen oder geöffneten Zustand einnehmen. Diese Zustände können durch Ansteuerung des Schaltelements, insbesondere durch Anlegen einer entsprechenden Gate-Spannung, eingestellt werden.

Weiter ist eine resultierende Nennspannung eines Halbzweigs größer ist als eine gegenelektromotorische Spitzenspannung (EMF) zwischen zwei Phasenleitungen der Antriebsmaschine bei maximaler Rotationsgeschwindigkeit des Rotors der Antriebsmaschine. Die resultierende Nennspannung eines Halbzweigs kann in Abhängigkeit der Anzahl von Schalteinrichtungen und deren elektrischer Anordnung in einem Halbzweig gegeben sein. Umfasst ein Halbzweig genau eine Schalteinrichtung, so entspricht die resultierende Nennspannung der Nennspannung dieser einen Schalteinrichtung. Umfasst ein Halbzweig mehrere in Reihe geschaltete Schalteinrichtungen, so entspricht die resultierende Nennspannung der Summe der Nennspannungen dieser Schalteinrichtungen.

Erfindungsgemäß umfasst ein Halbzweig eines Brückenzweigs eine Reihenschaltung von zwei oder mehr als zwei Schalteinrichtungen.

Ein erster Halbzweig eines Brückenzweigs kann insbesondere zwischen dem Hochpotentialabschnitt und dem Anschluss für die Phasenleitung an diesen Brückenzweig angeordnet sein. Dieser Halbzweig kann eine Anzahl m von in Reihe geschalteten Schalteinrichtungen umfassen. Hierbei kann eine Zählrichtung für Ordnungszahlen der Schalteinrichtungen im ersten Halbzweig vom Hochpotentialabschnitt zum Anschluss für die Phasenleitung orientiert sein. Der zweite Halbzweig kann zwischen dem Niedrigpotentialabschnitt und dem Anschluss für die Phasenleitung angeordnet sein. Entsprechend kann der zweite Halbzweig des Brückenzweigs eine Anzahl k von in Reihe geschalteten Schalteinrichtungen umfassen. Vorzugsweise ist die Anzahl m von Schalteinrichtungen im ersten Halbzweig gleich der Anzahl k der Schalteinrichtungen im zweiten Halbzweig. Hierbei kann eine Zählrichtung für Ordnungszahlen der Schalteinrichtungen im zweiten Halbzweig vom Niedrigpotentialabschnitt zum Anschluss für die Phasenleitung orientiert sein.

Durch die Ausbildung eines Halbzweigs als Reihenschaltung von mindestens zwei Schalteinrichtungen ergibt sich in vorteilhafter Weise, dass die Nennspannung einer einzelnen Schalteinrichtung geringer als die erläuterte gegenelektromotorische Spitzenspannung sein kann. Dies wiederum reduziert Herstellungskosten für eine solche Schalteinrichtung und kann die Verfügbarkeit solcher Schalteinrichtungen erhöhen.

In einer weiteren Ausführungsform ist der Stromrichter als n-stufiger Wechselrichter ausgebildet, wobei n größer als 2 ist. Dies kann bedeuten, dass durch einen Betrieb der Schalteinrichtungen in einem Brückenzweig, also das Einstellen von geöffneten und geschlossenen Zuständen der Schalteinrichtungen, n verschiedene Spannungslevel am Anschluss für die Phasenleitung des Brückenzweigs bereitgestellt werden können.

Die Ausbildung eines Halbzweigs als Reihenschaltung mehrerer Schalteinrichtungen ermöglicht in vorteilhafter Weise, insbesondere durch geeignete Verschaltung der Schalteinrichtungen, dass durch einen geeigneten Betrieb mehr als zwei Spannungslevel am erläuterten Anschluss bereitgestellt werden können. Hierdurch wiederum kann ein Betrieb einer an den Stromrichter angeschlossenen elektrischen Maschine verbessert werden. Dies ergibt sich insbesondere daraus, dass durch den Stromrichter ein Spannungsverlauf erzeugt werden kann, der wiederum dazu führt, dass ein Phasenstrom besser an eine Sinusform angepasst werden kann. Hierdurch wiederum kann sich eine Strom- und somit auch eine Drehmomentwelligkeit beim Betrieb der Antriebsmaschine reduzieren.

In einer bevorzugten Ausführungsform ist der Stromrichter als dreistufiger Wechselrichter ausgebildet. In diesem Fall kann durch Einstellen der Schaltzustände von Schalteinrichtungen im Brückenzweig entweder ein Potential des Hochpotentialabschnitts, ein Potential des Niedrigpotentialabschnitts oder ein Zwischenpotential am Anschluss für die Phasenleitung bereitgestellt werden. Das Zwischenpotential ist hierbei niedriger als das Hochpotential, jedoch höher als das Niedrigpotential. Vorzugsweise entspricht ist das Zwischenpotential dem Mittenpotential zwischen Hoch- und Niedrigpotential.

In diesem Fall kann ein Halbzweig eine Reihenschaltung von genau zwei Schalteinrichtungen umfassen. Hierdurch ergibt sich in vorteilhafter Weise ein guter Kompromiss zwischen einer Verbesserung des Betriebs der elektrischen Antriebsmaschine und den Herstellungskosten des Stromrichters.

In einer weiteren Ausführungsform umfasst die Reihenschaltung eines Halbzweigs drei Schalteinrichtungen. Hierdurch ergibt sich in vorteilhafter Weise ein guter Kompromiss zwischen einer Verbesserung des Betriebs der elektrischen Antriebsmaschine und der Anzahl der hierzu notwendigen Schalteinrichtungen in einem Halbzweig und somit mit den Herstellungskosten des Stromrichters, da eine solche Reihenschaltung insbesondere die Ausbildung sowohl eines dreistufigen als auch eines fünfstufigen Stromrichters ermöglicht.

In einer weiteren Ausführungsform umfasst der Gleichspannungszwischenkreis eine Reihenschaltung von zwei kapazitiven Elementen. Ein kapazitives Element kann insbesondere als Kondensator ausgebildet sein. Hierdurch ergibt sich in vorteilhafter Weise eine einfache und zuverlässige Bereitstellung eines Zwischenpotentials, welches insbesondere in einem Kondensatorverbindungsabschnitt bereitgestellt wird, wobei ein Kondensatorverbindungsabschnitt zwei kapazitive Elemente der Reihenschaltung verbindet. Ein solches Zwischenpotential ermöglicht wiederum - wie nachfolgend noch näher erläutert - die einfache Bereitstellung eines drei- oder fünfstufigen Stromrichters.

In einer weiteren Ausführungsform ist der mindestens eine erläuterte Kondensator-Verbindungsabschnitt des Gleichspannungszwischenkreises jeweils mit einem Schalteinrichtungs-Verbindungsabschnitt im ersten Halbzweig als auch im zweiten Halbzweig elektrisch verbunden. Ein Schalteinrichtungs-Verbindungsabschnitt verbindet hierbei zwei Schalteinrichtungen eines Halbzweigs.

In einer weiteren Ausführungsform ist ein Kondensator-Verbindungsabschnitt mit einem Schalteinrichtungs-Verbindungsabschnitt im ersten Halbzweig verbunden, der zwei Schalteinrichtungen mit aufeinander folgenden Ordnungszahlen verbindet, wobei der Kondensator-Verbindungsabschnitt auch mit einem Schalteinrichtungs-Verbindungsabschnitt im zweiten Halbzweig verbunden, der zwei Schalteinrichtungen mit den gleichen Ordnungszahlen verbindet. Die Zählrichtung der Ordnungszahlen wurde vorhergehend bereits erläutert. Mit anderen Worten kann die Anzahl von in Reihe geschalteten Schalteinrichtungen, über die der Schalteinrichtungs-Verbindungsabschnitt in einem Halbzweig mit dem Anschluss für die Phasenleitung verbindbar ist, in beiden Halbzweigen gleich sein.

Hierdurch ergibt sich in vorteilhafter Weise ein einfacher Aufbau eines mehrstufigen Stromrichters, der zwischen dem Hochpotential und Niedrigpotential gleichverteilte Spannungslevel bereitstellen kann.

In einer weiteren Ausführungsform umfasst die elektrische Verbindung zumindest eine Diode und/oder zumindest eine Verbindungsschalteinrichtung. Eine Durchlassrichtung der Diode in der elektrischen Verbindung des Kondensator-Verbindungsabschnitts und eines Schalteinrichtungs-Verbindungsabschnitt im ersten Halbzweig kann hierbei vom Kondensator-Verbindungsabschnitt zum Schalteinrichtungs-Verbindungsabschnitt orientiert sein. Eine Durchlassrichtung der Diode in der elektrischen Verbindung des Kondensator-Verbindungsabschnitts und eines Schalteinrichtungs-Verbindungsabschnitt im zweiten Halbzweig kann hierbei vom Schalteinrichtungs-Verbindungsabschnitt zum Kondensator-Verbindungsabschnitt orientiert sein.

Eine Verbindungsschalteinrichtung kann eine Parallelschaltung eines Schaltelements und einer Freilaufdiode sein. Eine Durchlassrichtung der Freilaufdiode in der elektrischen Verbindung des Kondensator-Verbindungsabschnitts und eines Schalteinrichtungs-Verbindungsabschnitt im ersten Halbzweig kann hierbei vom Kondensator-Verbindungsabschnitt zum Schalteinrichtungs-Verbindungsabschnitt orientiert sein. Eine Durchlassrichtung der Freilaufdiode in der elektrischen Verbindung des Kondensator-Verbindungsabschnitts und eines Schalteinrichtungs-Verbindungsabschnitt im zweiten Halbzweig kann hierbei vom Schalteinrichtungs-Verbindungsabschnitt zum Kondensator-Verbindungsabschnitt orientiert sein.

Hierdurch ergibt sich in vorteilhafter Weise eine erhöhte Betriebssicherheit des Stromrichters, da unerwünschte Stromflüsse durch die Dioden verhindert werden.

In einer weiteren Ausführungsform ist die Summe der Nennspannungen der Schalteinrichtungen in einem Halbzweig höher ist als eine gegenelektromotorische Spitzenspannung zwischen zwei Phasenleitungen der Antriebsmaschine bei maximaler Rotationsgeschwindigkeit des Rotors der Antriebsmaschine. Somit ist also die resultierende Nennspannung höher ist als die gegenelektromotorische Spitzenspannung, was vorhergehend bereits erläutert wurde. Insbesondere kann hierbei die Nennspannung einer einzelnen Schalteinrichtung niedriger sein als die gegenelektromotorische Spitzenspannung.

Es ist möglich, dass die Nennspannungen aller Schalteinrichtungen in einem Halbzweig gleich sind. Allerdings ist es auch möglich, dass diese voneinander verschieden sind.

Es ist auch vorstellbar, dass die Summe der Nennspannungen der Schalteinrichtungen in einem Halbzweig kleiner als die oder gleich der gegenelektromotorischen Spitzenspannung zwischen zwei Phasenleitungen der Antriebsmaschine bei maximaler Rotationsgeschwindigkeit des Rotors der Antriebsmaschine ist, insbesondere wenn durch geeignete Maßnahmen sichergestellt ist, dass die elektrische Maschine nicht im generatorischen Betrieb betrieben wird.

Hierdurch ergibt sich in vorteilhafter Weise eine kostengünstige und betriebssichere Ausbildung des Stromrichters.

In einer weiteren Ausführungsform ist ein Schaltelement einer Schalteinrichtung, insbesondere einer Schalteinrichtung in einem Brückenzweig oder einer Verbindungsschalteinrichtung, als Siliciumcarbid-Schaltelement ausgebildet. Alternativ ist das Schaltelement als Galliumarsenid-Schaltelement ausgebildet. Weiter alternativ ist das Schaltelement als Galliumnitrit-Schaltelement ausgebildet. Weiter alternativ ist das Schaltelement als Diamant-Schaltelement oder Aluminiumnitrid ausgebildet. Hierdurch ergibt sich in vorteilhafter Weise eine verbesserte Anpassung an Anforderungen an die Spannungsfestigkeit und/oder Verlustleistung, wodurch wiederum eine erhöhte Betriebszuverlässigkeit gewährleistet werden kann.

In einer weiteren Ausführungsform ist eine Freilaufdiode einer Schalteinrichtung, insbesondere einer Schalteinrichtung in einem Brückenzweig oder einer Verbindungsschalteinrichtung, als Siliciumcarbid-Diode ausgebildet. Alternativ ist die Freilaufdiode als Galliumarsenid-Diode ausgebildet. Weiter alternativ ist die Freilaufdiode als Galliumnitrit-Diode ausgebildet. Weiter alternativ ist die Freilaufdiode als Diamant-Diode oder eine Aluminiumnitrid-Diode. Hierdurch ergibt sich in vorteilhafter Weise ebenfalls eine verbesserte Anpassung an Anforderungen an die Spannungsfestigkeit und/oder Verlustleistung, wodurch wiederum eine erhöhte Betriebszuverlässigkeit gewährleistet werden kann.

Vorzugweise sind das Schaltelement und die Freilaufdiode einer Schalteinrichtung von der gleichen Art.

Weiter vorgeschlagen wird ein elektrisches Antriebssystem, insbesondere für ein Schienenfahrzeug, wobei das elektrische Antriebssystem einen Stromrichter und eine elektrische Antriebsmaschine umfasst. Die elektrische Antriebsmaschine ist an den Stromrichter angeschlossen.

Die elektrische Antriebsmaschine ist eine permanenterregte Antriebsmaschine. Vorzugsweise ist die elektrische Antriebsmaschine eine permanenterregte Synchronmaschine.

D er Stromrichter weist Anschlüsse zur Verbindung mit einer Gleichspannungsquelle und Anschlüsse zur elektrischen Verbindung mit Phasenleitungen der elektrischen Antriebsmaschine auf, wobei der Stromrichter konfiguriert ist, eine Gleichspannung von der Gleichspannungsquelle über einen Gleichspannungszwischenkreis in eine Wechselspannung umzuwandeln, um die Antriebsmaschine anzutreiben, wobei der Stromrichter Brückenzweige zur Verbindung eines Hochpotentialabschnitts mit einem Niedrigpotentialabschnitt umfasst, wobei ein Brückenzweig zwei Halbzweige mit jeweils mindestens einer Schalteinrichtung umfasst, wobei eine resultierende Nennspannung eines Halbzweigs größer ist als eine gegenelektromotorische Spitzenspannung zwischen zwei Phasenleitungen der Antriebsmaschine bei maximaler Rotationsgeschwindigkeit der Antriebsmaschine, wobei ein Halbzweig eines Brückenzweigs genau eine Schalteinrichtungen umfasst. Die Phasenleitungen dienen zum Leiten eines Wechselstroms.

Weiter ist ein Schaltelement der Schalteinrichtung als Galliumarsenid-Schaltelement oder Galliumnitrit-Schaltelement oder Diamant-Schaltelement oder Aluminiumnitrid-Schaltelement ausgebildet.

Es ist weiter möglich, dass eine Freilaufdiode einer Schalteinrichtung, insbesondere einer Schalteinrichtung in einem Brückenzweig oder einer Verbindungsschalteinrichtung, als Galliumarsenid- Diode oder als Galliumnitrit- Diode oder als Diamant-Diode oder als Aluminiumnitrid-Diode ausgebildet ist. Vorzugweise sind das Schaltelement und die Freilaufdiode der Schalteinrichtung von der gleichen Art.

Aufgrund der Materialien des Schaltelements ergibt sich im Vergleich zu einem als Siliciumcarbid-Schaltelement ausgebildeten Schaltelement in vorteilhafter Weise eine höhere Spannungsfestigkeit des Schaltelements bei vergleichbaren sonstigen Anforderungen, insbesondere Bauraumanforderungen.

Der Stromrichter kann hierbei gemäß einer der in dieser Offenbarung erläuterten Ausführungsformen des Stromrichters mit einer Reihenschaltung von zwei oder mehr als zwei Schalteinrichtungen in einem Halbzweig weitergebildet sein.

Die elektrische Antriebsmaschine eines solchen Antriebssystems kann insbesondere eine permanenterregte Synchronmaschine sein. Weiter kann das elektrische Antriebssystem oder der Stromrichter eine Steuereinrichtung umfassen, die z.B. als Mikrocontroller oder als integrierte Schaltung ausgebildet oder eine(n) solche(n) umfassen kann. Die Steuereinrichtung kann einen Betrieb des Stromrichters, insbesondere die Einstellung von Schaltzuständen der Schalteinrichtungen des Stromrichters, und somit auch einen Betrieb der elektrischen Antriebsmaschine steuern.

Weiter vorgeschlagen wird ein Verfahren zum Betrieb eines Stromrichters gemäß einer der in dieser Offenbarung erläuterten Ausführungsformen. Das Verfahren kann hierbei auch zum Betrieb einer elektrischen Antriebsmaschine dienen. Hierbei werden Schaltzeitpunkte der Schalteinrichtungen in Abhängigkeit eines gewünschten zeitlichen Verlaufs einer Spannung und/oder Phasenstrom eingestellt, die an den Anschlüssen zur elektrischen Verbindung des Stromrichters mit Phasenleitungen einer elektrischen Antriebsmaschine vom Stromrichter bereitgestellt wird.

Hierbei können insbesondere verschiedene Spannungslevel dieser Spannung eingestellt werden, insbesondere mehr als zwei Spannungslevel.

Die Schaltzeitpunkte können insbesondere durch eine Steuereinrichtung eingestellt werden.

Die Vorteile des vorgeschlagenen Verfahrens wurden vorhergehend bereits erläutert.

Die Erfindung wird anhand von Ausführungsbeispielen näher erläutert. Die Figuren zeigen:
- Fig. 1: ein schematisches Schaltungsdiagramm eines Stromrichters zur Verwendung in einem erfindungsgemäßen Antriebssystem,
- Fig. 2: ein schematisches Schaltungsdiagramm eines Brückenzweigs eines Stromrichters zur Verwendung in einem erfindungsgemäßen Antriebssystem,
- Fig. 3: ein schematisches Schaltungsdiagramm eines Stromrichters zur Verwendung in einem erfindungsgemäßen Antriebssystem in einer weiteren Ausführungsform,
- Fig. 4: eine schematische Darstellung einer Ausgangsspannung des Stromrichters,
- Fig. 5: ein schematisches Schaltungsdiagramm eines Stromrichters zur Verwendung in einem erfindungsgemäßen Antriebssystem in einer weiteren Ausführungsform und
- Fig. 6: ein schematisches Schaltungsdiagramm Stromrichters zur Verwendung in einem erfindungsgemäßen Antriebssystem in einer weiteren Ausführungsform

Nachfolgend bezeichnen gleiche Bezugszeichen Elemente mit gleichen oder ähnlichen technischen Merkmalen.

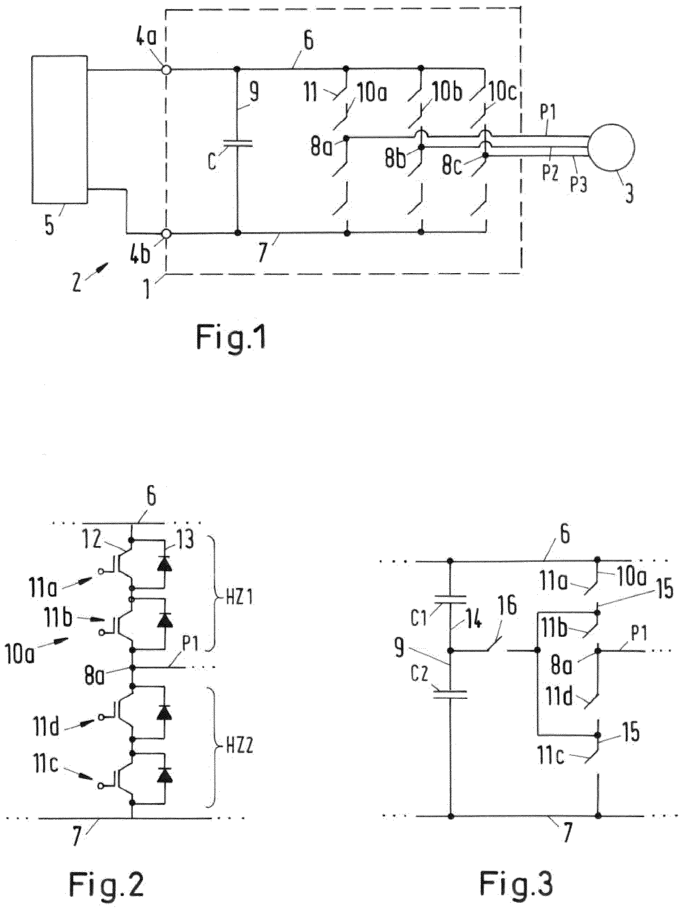

Fig. 1 zeigt ein schematisches Schaltungsdiagramm eines Stromrichters 1, der Teil eines erfindungsgemäßen elektrischen Antriebssystems 2 ist. Das Antriebssystem 2 umfasst neben dem Stromrichter 1 eine elektrische Antriebsmaschine 3. Die Antriebsmaschine ist eine permanentmagneterregte Antriebsmaschine, insbesondere eine permanenterregte Synchronmaschine. Das Antriebssystem 2 kann insbesondere ein Antriebssystem eines Schienenfahrzeugs sein.

Der Stromrichter 1 weist Anschlüsse 4a, 4b zur Verbindung mit einer Gleichspannungsquelle 5 auf. Hierbei dient ein Hochpotentialanschluss 4a zum Anschluss eines HochpotentialAbschnitts 6 des Stromrichters 1 mit an ein Hochpotential der Gleichspannungsquelle 5 und ein Niedrigpotentialanschluss 4b zum Anschluss eines Niedrigpotential-Abschnitts 7 des Stromrichters 1 an ein Niedrigpotential der Gleichspannungsquelle 5.

Weiter umfasst der Stromrichter 1 Anschlüsse 8a, 8b, 8c zur elektrischen Verbindung mit Phasenleitungen P1, P2, P3 der elektrischen Antriebsmaschine 3. Hierbei ist ein erster Anschluss 8a mit einer ersten Phasenleitung P1, ein zweiter Anschluss 8b mit einer zweiten Phasenleitung P2 und ein dritter Anschluss 8c mit einer dritten Phasenleitung P3 verbunden.

Der Stromrichter 1 ist konfiguriert, eine Gleichspannung von der Gleichspannungsquelle 5 über einen Gleichspannungszwischenkreis 9 in eine Wechselspannung umzuwandeln, um die Antriebsmaschine 3 anzutreiben. Der Gleichspannungs-Zwischenkreis 9 umfasst einen Zwischenkreiskondensator C, über den der Hoch- und Niedrigpotentialabschnitt 6, 7 verbunden ist. Weiter umfasst der Stromrichter 1 drei Brückenzweige 10a, 10b, 10c zur Verbindung des Hochpotentialabschnitts 6 mit dem Niedrigpotentialabschnitt 7, wobei ein Brückenzweig 10a, 10b, 10c zwei Halbzweige HZ1, HZ2 (siehe Fig. 2) mit jeweils mindestens einer Schalteinrichtung 11 umfasst. Der Übersichtlichkeit halber ist in Fig. 1 nur eine Schalteinrichtung 11 mit einem Bezugszeichen versehen.

Weiter dargestellt ist, dass ein Halbzweig HZ1, HZ2 eines Brückenzweigs 10a, 10b, 10c eine Reihenschaltung von mindestens zwei Schalteinrichtungen 11 umfasst.

Die Schalteinrichtungen 11 in einem Brückenzweig 10a, 10b, 10c sind hierbei derart ausgebildet, dass eine resultierende Nennspannung eines Halbzweigs HZ1, HZ2 größer ist als eine gegenelektromotorische Spitzenspannung zwischen zwei Phasenleitungen P1, P2, P3 der Antriebsmaschine 3 bei maximaler Rotationsgeschwindigkeit des Rotors der Antriebsmaschine 3.

Fig. 2 zeigt ein schematisches Schaltungsdiagramm eines ersten Brückenzweigs 10a eines Stromrichters 1 zur Verwendung in einem erfindungsgemäßen Antriebssystem 2. Ersichtlich ist, dass eine Schalteinrichtung 11 durch eine Parallelschaltung aus einem Schaltelement 12, welches z.B. als MOSFET oder IGBT ausgebildet ist, und einer Freilaufdiode 13 umfasst. Der Übersichtlichkeit halber ist nur ein Schaltelement 12 und eine Freilaufdiode 13 mit einem Bezugszeichen versehen.

Weiter dargestellt ist, dass ein erster Halbzweig HZ1, der den Hochpotentialabschnitt 8 mit dem Anschluss 8a für die erste Phasenleitung P1 verbindet, eine Reihenschaltung einer ersten Schalteinrichtung 11a und einer weiteren Schalteinrichtung 11b des ersten Halbzweigs HZ1 umfasst. Ein zweiter Halbzweig HZ2, der den Niedrigpotentialabschnitt 7 mit dem Anschluss 8a für die erste Phasenleitung P1 verbindet, umfasst eine Reihenschaltung einer ersten Schalteinrichtung 11c und einer weiteren Schalteinrichtung 11d des zweiten Halbzweigs HZ2.

Hierbei können die Schalteinrichtungen 11a, 11b bzw. 11c, 11d derart ausgebildet sein, dass die Summe der Nennspannungen der Schalteinrichtungen 11a, 11b bzw. 11c, 11d in einem Halbzweig HZ1, HZ2 höher ist als die bereits erläuterte gegenelektromotorische Spitzenspannung zwischen zwei Phasenleitungen P1, P2, P3. Insbesondere kann hierbei die Nennspannung einer einzelnen Schalteinrichtung 11a, 11b, 11c, 11d niedriger sein als die gegenelektromotorische Spitzenspannung.

Fig. 3 zeigt ein schematisches Schaltungsdiagramm eines Stromrichters 1, wobei der Hochpotentialabschnitt 6, der Niedrigpotentialabschnitt 7, der Gleichspannungszwischenkreis 9 und der erste Brückenzweig 10a dargestellt sind. Der in Fig. 3 dargestellte Stromrichter 1 ist als dreistufiger Wechselrichter ausgebildet.

Hierfür umfasst die Reihenschaltung von Schalteinrichtungen 11a, 11b bzw. 11c, 11d pro Halbzweig HZ1, HZ2 zwei Schalteinrichtungen 11a, 11b bzw. 11c, 11d. Weiter umfasst der Gleichspannungszwischenkreis (9) eine Reihenschaltung von zwei Kondensatoren C1, C2.

Ein Kondensator-Verbindungsabschnitt 14, der die beiden Kondensatoren C1, C2 im Gleichspannungszwischenkreis 9 verbindet, ist sowohl mit einem Schalteinrichtungs-Verbindungsabschnitt 15 zur Verbindung der ersten Schalteinrichtung 11a mit der zweiten Schalteinrichtung 11b des ersten Halbzweigs HZ1 als auch mit einem Verbindungsabschnitt 15 zur Verbindung von der ersten Schalteinrichtung 11c mit der zweiten Schalteinrichtung 11d des zweiten Halbzweigs HZ2 elektrisch verbunden. Dargestellt ist, dass diese Verbindung über eine Verbindungsschalteinrichtung16 erfolgt.

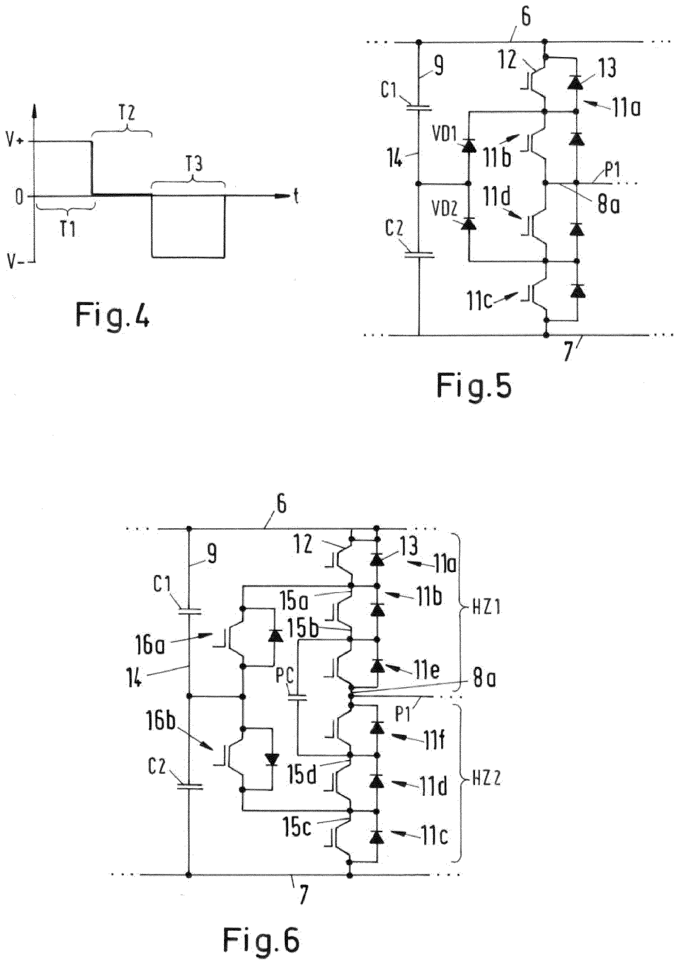

Durch die derartige Ausbildung des Stromrichters 1 wird ermöglicht, dass die in Fig. 4 dargestellten Spannungslevel eingestellt werden können. Fig. 4 zeigt einen schematischen zeitlichen Verlauf von Spannungsniveaus, die am Anschluss 8a für die erste Phasenleitung P1 des ersten Brückenzweigs 10a eingestellt werden können. In einem ersten Zeitfenster T1 wird ein erstes Spannungslevel eingestellt, welches dem Hochpotential V+ entspricht. Hierzu sind die Schalteinrichtungen 11a, 11b des ersten Halbzweigs HZ1 geschlossen, während die Schalteinrichtungen 11c, 11d des zweiten Halbzweigs HZ2 geöffnet sind. In einem zweiten Zeitfenster T2 wird ein zweites Spannungslevel eingestellt, welches einem Mittenpotential zwischen dem Hoch- und Niedrigpotential entspricht. In Fig. 4 ist dargestellt, dass das Mittenpotential ein Nullpotential ist.

Hierzu ist die erste Schalteinrichtung 11a des ersten Halbzweigs HZ1 geöffnet, während die zweite Schalteinrichtung 11b des ersten Halbzweigs HZ1 geschlossen ist. Die Schalteinrichtungen 11c, 11d des zweiten Halbzweigs HZ2 sind ebenfalls geöffnet. Diese Schaltzustände werden insbesondere dann eingestellt, wenn ein Stromfluss vom Kondensator-Verbindungsabschnitt 14 zum Anschluss 8a gerichtet ist/sein soll. Das zweite Spannungslevel kann auch eingestellt werden, indem die erste Schalteinrichtung 11c des zweiten Halbzweigs HZ2 geöffnet wird, während die zweite Schalteinrichtung 11d des zweiten Halbzweigs HZ2 geschlossen wird. Die Schalteinrichtungen 11a, 11b des ersten Halbzweigs HZ1 werden geöffnet. Diese Schaltzustände werden insbesondere dann eingestellt, wenn ein Stromfluss vom Anschluss 8a hin zum Kondensator-Verbindungsabschnitt 14 gerichtet ist/sein soll.

In einem dritten Zeitfenster T3 wird ein drittes Spannungslevel eingestellt, welches dem Niedrigpotential V- entspricht. Hierzu sind die Schalteinrichtungen 11a, 11b des ersten Halbzweigs HZ1 geöffnet, während die Schalteinrichtungen 11c, 11d des zweiten Halbzweigs HZ2 geschlossen sind.

Fig. 5 zeigt ein schematisches Schaltungsdiagramm eines Stromrichters 1 zur Verwendung in einem erfindungsgemäßen Antriebssystem 2, wobei der Hochpotentialabschnitt 6, der Niedrigpotentialabschnitt 7, der Gleichspannungszwischenkreis 9 und der erste Brückenzweig 10a dargestellt sind.

Der in Fig. 5 dargestellte Stromrichter 1 entspricht hierbei dem in Fig. 3 dargestellten Stromrichter 1, wobei die Schalteinrichtungen 11a, 11b, 11c, 11d als Parallelschaltung eines Schaltelements 12 und einer Freilaufdiode 13 dargestellt sind.

Im Unterschied zu der in Fig. 3 dargestellten Ausführungsform erfolgt die elektrische Verbindung des Kondensator-Verbindungsabschnitts 14 mit dem Schalteinrichtungs-Verbindungsabschnitt 15 zur Verbindung der ersten Schalteinrichtung 11a mit der zweiten Schalteinrichtung 11b des ersten Halbzweigs HZ1 über eine erste Verbindungsdiode VD1, wobei eine Durchlassrichtung dieser Verbindungsdiode VD1 vom Kondensator-Verbindungsabschnitt 14 zum Schalteinrichtungs-Verbindungsabschnitt 15 orientiert ist.

Weiter dargestellt ist, dass die elektrische Verbindung des Kondensator-Verbindungsabschnitts 14 mit dem Schalteinrichtungs-Verbindungsabschnitt 15 zur Verbindung der ersten Schalteinrichtung 11c mit der zweiten Schalteinrichtung 11d des zweiten Halbzweigs HZ2 über eine weitere Verbindungsdiode VD2 erfolgt, wobei eine Durchlassrichtung dieser weiteren Verbindungsdiode VD2 vom Schalteinrichtungs-Verbindungsabschnitt 15 zum Kondensator-Verbindungsabschnitt 14 orientiert ist.

Fig. 6 zeigt ein schematisches Schaltungsdiagramm eines Stromrichters 1 zur Verwendung in einem erfindungsgemäßen Antriebssystem 2, wobei der Hochpotentialabschnitt 6, der Niedrigpotentialabschnitt 7, der Gleichspannungszwischenkreis 9 und der erste Brückenzweig 10a dargestellt sind. Der in
Fig. 6 dargestellte Stromrichter 1 ist als fünfstufiger Stromrichter ausgebildet.

Dargestellt ist, dass in einem ersten Halbzweig HZ1 des ersten Brückenzweigs drei Schalteinrichtungen 11a, 11b, 11e in Reihe geschaltet sind, wobei diese Schalteinrichtungen wiederum als Parallelschaltung eines Schaltelements 12 und einer Freilaufdiode 13 ausgebildet sind. Entsprechend umfasst der zweite Halbzweig HZ2 des zweiten Brückenzweigs ebenfalls drei derart ausgebildete Schalteinrichtungen 11c, 11d, 11f, die ebenfalls in Reihe geschaltet sind.

Weiter dargestellt ist, dass der Gleichspannungszwischenkreis 9 eine Reihenschaltung von zwei Kondensatoren C1, C2 umfasst, wobei ein Kondensator-Verbindungsabschnitt 14, der die beiden Kondensatoren C1, C2 im Gleichspannungszwischenkreis 9 verbindet, sowohl mit einem ersten Schalteinrichtungs-Verbindungsabschnitt 15a zur Verbindung der ersten Schalteinrichtung 11a mit der zweiten Schalteinrichtung 11b des ersten Halbzweigs HZ1 als auch mit einem ersten Verbindungsabschnitt 15c zur Verbindung von der ersten Schalteinrichtung 11c mit der zweiten Schalteinrichtung 11d des zweiten Halbzweigs HZ2 elektrisch verbunden ist. Der Kondensator-Verbindungsabschnitt 14 ist weiter sowohl mit einem zweiten Schalteinrichtungs-Verbindungsabschnitt 15b zur Verbindung der zweiten Schalteinrichtung 11b mit der dritten Schalteinrichtung 11e des ersten Halbzweigs HZ1 als auch mit einem zweiten Verbindungsabschnitt 15d zur Verbindung von der zweiten Schalteinrichtung 11d mit der dritten Schalteinrichtung 11 f des zweiten Halbzweigs HZ2 elektrisch verbunden.

Weiter dargestellt ist, dass die elektrische Verbindung des Kondensator-Verbindungsabschnitts 14 mit dem ersten Schalteinrichtungs-Verbindungsabschnitt 15a des ersten Halbzweigs HZ1 über eine erste Verbindungsschalteinrichtung 16a erfolgt, wobei diese Verbindungsschalteinrichtung 16a als Parallelschaltung eines Schaltelements 12 und einer Freilaufdiode 13 ausgebildet ist, wobei die Durchlassrichtung der Freilaufdiode 13 vom Kondensator-Verbindungsabschnitt 14 zum ersten Schalteinrichtungs-Verbindungsabschnitt 15a orientiert ist.

Weiter dargestellt ist, dass die elektrische Verbindung des Kondensator-Verbindungsabschnitts 14 mit dem ersten Schalteinrichtungs-Verbindungsabschnitt 15c des zweiten Halbzweigs HZ2 über eine weitere Verbindungsschalteinrichtung 16b erfolgt, die ebenfalls als Parallelschaltung eines Schaltelements 12 und einer Freilaufdiode 13 ausgebildet ist, wobei die Durchlassrichtung der Freilaufdiode 13 vom Schalteinrichtungs-Verbindungsabschnitt 15c zum Kondensator-Verbindungsabschnitt 14 orientiert ist.

Weiter dargestellt ist ein Phasenkondensator PC, über den der zweite Schalteinrichtungs-Verbindungsabschnitt 15b des ersten Halbzweigs HZ1 mit dem zweiten Schalteinrichtungs-Verbindungsabschnitt 15d des zweiten Halbzweigs HZ2 verbunden ist.

Durch geeignete Einstellung der Schaltzustände der Schaltelemente 12 der Schalteinrichtungen 11a, ..., 11f, 16a, 16b können fünf verschiedene Niveaus der Phasenspannung eingestellt werden.

### Bezugszeichenliste

- 1: Stromrichter
- 2: elektrisches Antriebssystem
- 3: elektrische Maschine
- 4a: Hochpotential-Anschluss
- 4b: Niedrigpotential-Anschluss
- 5: Gleichspannungsquelle
- 6: Hochpotentialabschnitt
- 7: Niedrigpotentialabschnitt
- 8a, 8b, 8c: Anschlüsse für Phasenleitungen
- 9: Gleichspannungszwischenkreis
- 10a, 10b, 10c: Brückenzweige
- 11, 11a, 11b 11c, 11d: Schalteinrichtungen
- 12: Schaltelement
- 13: Freilaufdiode
- 14: Kondensator-Verbindungsabschnitt
- 15,15a, 15b 15c, 15d: Schalteinrichtungs-Verbindungsabschnitt
- 16, 16a, 16b: Verbindungsschalteinrichtung
- P1, P2, P3: Phasenleitungen
- HZ1: erster Halbzweig
- HZ2: zweiter Halbzweig
- C: Zwischenkreiskondensator
- C1, C2: Kondensator
- PC: Phasenkondensator
- T1, T2, T3: Zeitfenster
- V+: Hochpotential
- V-: Niedrigpotential

## Patentansprüche

1. Elektrisches Antriebssystem, insbesondere für ein Schienenfahrzeug, wobei das elektrische Antriebssystem (2) einen Stromrichter (1) und eine elektrische Antriebsmaschine (3) umfasst, die an den Stromrichter (1) angeschlossen ist, wobei die elektrische Antriebsmaschine (3) eine permanenterregte Antriebsmaschine ist, wobei der Stromrichter (1) Anschlüsse (4a, 4b) zur Verbindung mit einer Gleichspannungsquelle (5) und Anschlüsse (8a, 8b, 8c) zur elektrischen Verbindung mit Phasenleitungen (P1, P2, P3) der elektrischen Antriebsmaschine (3) aufweist, wobei der Stromrichter (1) konfiguriert ist, eine Gleichspannung von der Gleichspannungsquelle (5) über einen Gleichspannungszwischenkreis (9) in eine Wechselspannung umzuwandeln, um die Antriebsmaschine (3) anzutreiben, wobei der Stromrichter (1) Brückenzweige (10a, 10b, 10c) zur Verbindung eines Hochpotentialabschnitts (6) mit einem Niedrigpotentialabschnitt (7) umfasst, wobei ein Brückenzweig (10a, 10b, 10c) zwei Halbzweige (HZ1, HZ2) mit jeweils mindestens einer Schalteinrichtung (11, 11a, 11b, 11c, 11d, 11 e, 11f) umfasst, wobei eine resultierende Nennspannung eines Halbzweigs (HZ1, HZ2) größer ist als eine gegenelektromotorische Spitzenspannung (EMF) zwischen zwei Phasenleitungen (P1, P2, P3) der Antriebsmaschine (3) bei maximaler Rotationsgeschwindigkeit der Antriebsmaschine (3), wobei ein Halbzweig (HZ1, HZ2) eines Brückenzweigs (10a, 10b, 10c) eine Reihenschaltung von zwei oder mehr als zwei Schalteinrichtungen (11, 11a, 11b, 11c, 11d, 11e, 11f) umfasst.

2. Antriebssystem nach Anspruch 1, **dadurch gekennzeichnet, dass** der Stromrichter (1) als n-stufiger Wechselrichter ausgebildet ist, wobei n größer als Zwei ist.

3. Antriebssystem nach Anspruch 2, **dadurch gekennzeichnet, dass** der Stromrichter (1) als dreistufiger Wechselrichter ausgebildet ist.

4. Antriebssystem nach einem der Ansprüche 2 oder 3, **dadurch gekennzeichnet, dass** die Reihenschaltung eines Halbzweigs (HZ1, HZ2) drei Schalteinrichtungen (11, 11a, 11b, 11c, 11d, 11e, 11f) umfasst.

5. Antriebssystem nach einem der Ansprüche 2 bis 4, **dadurch gekennzeichnet, dass** ein Gleichspannungszwischenkreis (9) eine Reihenschaltung von mindestens zwei kapazitiven Elementen (C1, C2) umfasst.

6. Antriebssystem nach Anspruch 5, **dadurch gekennzeichnet, dass** mindestens ein Kondensator-Verbindungsabschnitt (14) zur Verbindung von zwei kapazitiven Elementen (C1, C2) der Reihenschaltung im Gleichspannungszwischenkreis (9) jeweils mit einem Schalteinrichtungs-Verbindungsabschnitt (15) zur Verbindung von zwei Schalteinrichtungen (11a, 11b, 11c, 11d, 11 e, 11f) eines Halbzweigs (HZ1, HZ2) elektrisch verbunden ist.

7. Antriebssystem nach Anspruch 6, **dadurch gekennzeichnet, dass** ein Kondensator-Verbindungsabschnitt (14) mit einem Schalteinrichtungs-Verbindungsabschnitt (15, 15a) im ersten Halbzweig (HZ1) verbunden ist, der zwei Schalteinrichtungen (11a, 11b) mit zwei aufeinander folgenden Ordnungszahlen verbindet, wobei der Kondensator-Verbindungsabschnitt (14) auch mit einem Schalteinrichtungs-Verbindungsabschnitt (15, 15c) im zweiten Halbzweig (HZ2) verbunden ist, der zwei Schalteinrichtungen (11c, 11d) mit den gleichen Ordnungszahlen verbindet.

8. Antriebssystem nach Anspruch 6 oder 7, **dadurch gekennzeichnet, dass** die elektrische Verbindung zumindest eine Diode (VD1, VD2) und/oder zumindest eine Verbindungsschalteinrichtung (16a, 16b) umfasst.

9. Antriebssystem nach einem der vorangegangenen Ansprüchen, **dadurch gekennzeichnet, dass** die Summe der Nennspannungen der Schalteinrichtungen (11, 11a, 11b, 11c, 11d, 11e, 11f) in einem Halbzweig (HZ1, HZ2) höher ist als eine gegenelektromotorische Spitzenspannung zwischen zwei Phasenleitungen (P1, P2, P3) der Antriebsmaschine (3) bei maximaler Rotationsgeschwindigkeit des Rotors der Antriebsmaschine (3).

10. Antriebssystem nach einem der vorangegangenen Ansprüchen, **dadurch gekennzeichnet, dass** ein Schaltelement (12) einer Schalteinrichtung (11, 11a, 11b, 11c, 11d, 11e, 11f, 16a, 16b) als Siliciumcarbid-Schaltelement oder Galliumarsenid-Schaltelement oder Galliumnitrit-Schaltelement oder Diamant-Schaltelement oder Aluminiumnitrid-Schaltelement ausgebildet ist.

11. Antriebssystem nach einem der vorangegangenen Ansprüche, **dadurch gekennzeichnet, dass** eine Freilaufdiode (13) einer Schalteinrichtung (11, 11a, 11b, 11c, 11d, 11e, 11f, 16a, 16b) als Siliciumcarbid-Diode oder Galliumarsenid- Diode oder Galliumnitrit- Diode oder Diamant-Diode oder Aluminiumnitrid-Diode ausgebildet ist.

12. Elektrisches Antriebssystem, insbesondere für ein Schienenfahrzeug, wobei das elektrische Antriebssystem (2) einen Stromrichter (1) und eine elektrische Antriebsmaschine (3) umfasst, die an den Stromrichter (1) angeschlossen ist, wobei die elektrische Antriebsmaschine (3) eine permanenterregte Antriebsmaschine ist, wobei der Stromrichter (1) Anschlüsse (4a, 4b) zur Verbindung mit einer Gleichspannungsquelle (5) und Anschlüsse (8a, 8b, 8c) zur elektrischen Verbindung mit Phasenleitungen (P1, P2, P3) der elektrischen Antriebsmaschine (3) aufweist, wobei der Stromrichter (1) konfiguriert ist, eine Gleichspannung von der Gleichspannungsquelle (5) über einen Gleichspannungszwischenkreis (9) in eine Wechselspannung umzuwandeln, um die Antriebsmaschine (3) anzutreiben, wobei der Stromrichter (1) Brückenzweige (10a, 10b, 10c) zur Verbindung eines Hochpotentialabschnitts (6) mit einem Niedrigpotentialabschnitt (7) umfasst, wobei ein Brückenzweig (10a, 10b, 10c) zwei Halbzweige (HZ1, HZ2) mit jeweils mindestens einer Schalteinrichtung (11, 11a, 11b, 11c, 11d, 11 e, 11f) umfasst, wobei eine resultierende Nennspannung eines Halbzweigs (HZ1, HZ2) größer ist als eine gegenelektromotorische Spitzenspannung (EMF) zwischen zwei Phasenleitungen (P1, P2, P3) der Antriebsmaschine (3) bei maximaler Rotationsgeschwindigkeit der Antriebsmaschine (3), wobei ein Halbzweig (HZ1, HZ2) eines Brückenzweigs (10a, 10b, 10c) genau eine Schalteinrichtung (11, 11a, 11b, 11c, 11d, 11 e, 11f) umfasst, wobei ein Schaltelement der Schalteinrichtung als Galliumarsenid-Schaltelement oder Galliumnitrit-Schaltelement oder Diamant-Schaltelement oder Aluminiumnitrid-Schaltelement ausgebildet ist.

13. Elektrisches Antriebssystem nach einem der Ansprüche 1 bis 12, **dadurch gekennzeichnet, dass** die permanenterregte Antriebsmaschine eine permanenterregte Synchronmaschine ist.

14. Verfahren zum Betrieb eines Antriebssystems gemäß einem der Ansprüche 1 bis 13, **dadurch gekennzeichnet, dass** Schaltzeitpunkte der Schalteinrichtungen (11, 11a, 11b, 11c, 11d, 11e, 11f) in Abhängigkeit eines gewünschten zeitlichen Verlaufs eines Stroms eingestellt werden, der an den Anschlüssen (8a, 8b, 8c) zur elektrischen Verbindung mit Phasenleitungen (P1, P2, P3) einer elektrischen Antriebsmaschine (3) vom Stromrichter (1) bereitgestellt wird.
